# FASCICULE DE BREVET EUROPEEN

(11) **EP 4 244 978 B1**
(45) Date de publication et mention de la délivrance du brevet: **28.08.2024**
(21) Numéro de dépôt: 21805657.0
(22) Date de dépôt: 08.11.2021
(51) Int. Cl.: H02S 20/23

(54) **PLAQUE DE SUPPORT PERFECTIONNÉE POUR PANNEAU PHOTOVOLTAÏQUE**
VERBESSERTE TRÄGERPLATTE FÜR FOTOVOLTAISCHE TAFELN
IMPROVED SUPPORT PLATE FOR PHOTOVOLTAIC PANELS

(30) Priorité: 11.11.2020 FR 2011573
(43) Date de publication de la demande: 20.09.2023
(73) Titulaire: Gys Holding, 93400 Saint-Ouen-sur-Seine (FR)
(72) Inventeur: DOUIEB, Yaniv, Tel Aviv (IL)
(74) Mandataire: Alatis
(86) Numéro de dépôt international: PCT/IB2021/060316
(87) Numéro de publication internationale: WO 2022/101758

(56) Documents cités:
- EP-A1- 2 541 162
- DE-U1- 202007 012 888
- DE-U1- 202013 004 877

## Description

### Domaine de l'invention

La présente demande brevet se rapporte à une plaque de support adaptée pour la fixation et l'intégration d'un panneau photovoltaïque, qui est conçue pour s'adapter à différentes dimensions de panneaux photovoltaïques.

### Etat de la technique

L'installation et la fixation des panneaux photovoltaïques sont traditionnellement effectuées à l'aide de systèmes de rails métalliques qui pèsent lourds et nécessitent des moyens de transport adaptés.

De plus, l'installation sur toiture d'un système de rails métalliques est délicate.

On connaît également de l'état de la technique une plaque de support pour panneau photovoltaïque qui est décrite et représentée dans le document EP-A-3143691 ou le document EP 2541162 A1. Une telle plaque de support est adaptée pour la fixation et l'intégration d'un panneau photovoltaïque sur une toiture.

A cet effet, la plaque de support, qui est montée sur la toiture, comporte notamment des plots pour le support et la fixation du panneau photovoltaïque sur la plaque de support.

**Problème technique restant posé**

Bien que la plaque de support du type décrite dans le document EP-A-3143691 permette une installation aisée d'un panneau photovoltaïque, elle est adaptée à une seule dimension de panneau photovoltaïque.

### Exposé de l'invention

La présente invention a notamment pour but de résoudre cet inconvénient.

On atteint cet objectif, ainsi que d'autres apparaîtront à la lecture de la description qui suit, avec une plaque de support adaptée pour la fixation et l'intégration d'un panneau photovoltaïque sur une toiture d'un bâtiment, ladite plaque de support étant délimitée transversalement par un premier bord latéral et un second bord latéral et longitudinalement par un premier bord supérieur et un second bord inférieur, caractérisée en ce que la plaque de support comporte un dispositif d'allongement suivant au moins une direction transversale et/ou une direction longitudinale, pour adapter les dimensions de la plaque de support aux dimensions du panneau photovoltaïque associé.

Cette caractéristique permet d'offrir un support de panneau photovoltaïque qui est adaptable à des panneaux photovoltaïques de différentes dimensions.

De plus, le dispositif d'allongement permet à la plaque de support de se déformer pour absorber les variations dimensionnelles du panneau photovoltaïque associé dues aux effets de dilatation.

Suivant d'autres caractéristiques optionnelles de l'invention, prises seules ou en combinaison :
- le dispositif d'allongement comprend au moins une première bande d'allongement qui s'étend longitudinalement et qui est apte à être étendue ou rétractée pour permettre l'allongement ou le rétrécissement de la plaque de support suivant une direction transversale perpendiculaire à ladite première bande d'allongement ;
- ladite première bande d'allongement forme un accordéon qui comprend au moins un plis longitudinal ;
- ladite première bande d'allongement est réalisée venue de matière avec la plaque de support. Cette caractéristique favorise la fabrication de la plaque de support selon l'invention et permet d'obtenir une plaque de support monobloc à la manipulation favorisée ;
- le dispositif d'allongement comprend au moins une deuxième bande d'allongement qui s'étend longitudinalement et qui est apte à être étendue ou rétractée pour permettre l'allongement ou le rétrécissement de la plaque de support suivant une direction transversale à ladite deuxième bande d'allongement ;
- le dispositif d'allongement comprend au moins une troisième bande d'allongement qui s'étend transversalement et qui est apte à être étendue ou rétractée pour permettre l'allongement ou le rétrécissement de la plaque de support suivant une direction longitudinale perpendiculaire à ladite troisième bande d'allongement ;
- elle comporte au moins une butée supérieure et une butée inférieure opposées qui sont agencées de façon à coopérer avec un bord supérieur et un bord inférieur respectivement d'un panneau photovoltaïque monté sur ladite plaque de support, pour s'opposer au retrait longitudinal de la plaque de support ;
- elle comporte au moins une première butée latérale et une seconde butée latérale opposées qui sont agencées de façon à coopérer avec un premier bord latéral et un second bord latéral respectivement d'un panneau photovoltaïque monté sur ladite plaque de support, pour s'opposer au retrait transversal de la plaque de support ;
- elle comporte une bouche qui est adaptée pour permettre la récupération de l'air interposé entre le panneau photovoltaïque et la plaque de support.

La présente invention se rapporte également à un ensemble qui comprend une plaque de support du type décrite précédemment et un panneau photovoltaïque monté sur ladite plaque de support.

### Brève description des dessins

D'autres caractéristiques et avantages de l'invention ressortiront à la lecture de la description qui suit, en référence aux figures annexées, qui illustrent :
[Fig.1] : une vue en perspective d'une plaque de support comportant un dispositif d'allongement selon un premier mode de réalisation de l'invention ;
[Fig.2] : une vue en section transversale d'un ensemble comprenant un panneau photovoltaïque et la plaque de support de la [Fig.1], suivant la ligne 2-2 de la [Fig.1] ;
[Fig.3] : une vue en section transversale de détail du chevauchement et de la jonction de deux plaques de support telle que celle représentée à la [Fig.1] ;
[Fig.4] : une vue en perspective de la plaque de support selon un deuxième mode de réalisation de l'invention ;
[Fig.5] : une vue en perspective de la plaque de support selon un troisième mode de réalisation de l'invention.

Pour plus de clarté, les éléments identiques ou similaires sont repérés par des signes de référence identiques ou similaires sur l'ensemble des figures.

On adoptera aussi à titre non limitatif la terminologie longitudinal, vertical et transversal en référence au trièdre L, V, T indiqué aux figures.

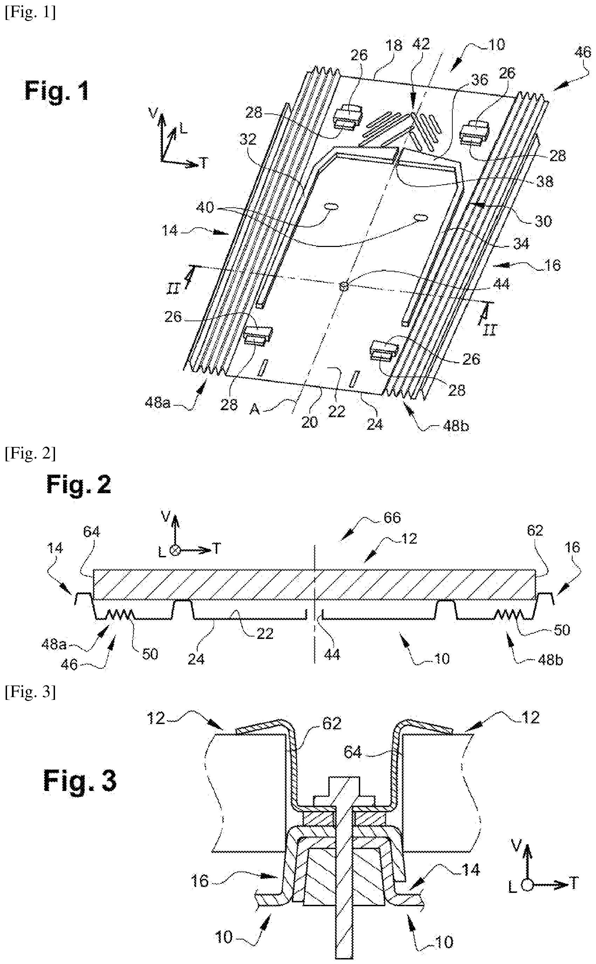

De plus, dans la description et les revendications, on utilisera à titre non limitatif les expressions « supérieur » et « inférieur » en référence à la partie supérieure et à la partie inférieure respectivement de la [Fig.1] et en référence à la position d'utilisation de 1a plaque de support selon l'invention sur la toiture d'un bâtiment.

### Description détaillée de modes de réalisation de l'invention

On a représenté à la [Fig.1] une plaque de support 10 adaptée pour la fixation et l'intégration d'un panneau photovoltaïque 12 (visible à la [Fig.2]) sur la toiture d'un bâtiment.

La plaque de support 10 est destinée à être agencée sur une toiture, généralement de façon inclinée par rapport à un axe vertical, suivant la pente de la toiture.

La plaque de support 10 s'étend transversalement depuis un premier bord latéral 14 longitudinal, jusqu'à un second bord latéral 16 longitudinal opposé.

On notera que le premier bord latéral 14 et le second bord latéral 16 de la plaque de support 10 présentent chacun une section transversale globalement en U inversé, le second bord latéral 16 étant conçu pour chevaucher le premier bord latéral 14 de forme complémentaire, lorsque deux plaques de support 10 voisines sont juxtaposées transversalement comme illustré à la [Fig.3], pour assurer une bonne étanchéité entre les plaques de support 10.

De même, la plaque de support 10 s'étend longitudinalement depuis un premier bord supérieur 18 transversal, jusqu'à un second bord inférieur 20 transversal.

Aussi, la plaque de support 10 présente une face avant 22 qui est destinée à être agencée en regard du panneau photovoltaïque 12 et une face arrière 24 opposée qui est destinée à être agencée en regard de la toiture.

Selon un autre aspect, en référence à la [Fig.1], la plaque de support 10 comporte quatre plots de positionnement 26 du panneau photovoltaïque 12 qui font saillie et qui permettent le positionnement, le guidage et le support du panneau photovoltaïque 12, ainsi que le support des pieds des poseurs du panneau photovoltaïque 12.

De plus, chaque plot de positionnement 26 est associé à une zone de perçage 28 qui est agencée en aval du plot de positionnement 26 associé, suivant le sens d'écoulement des eaux de ruissellement, pour être protégée de l'écoulement d'eau. On entend par zone de perçage 28 une zone qui est conçue pour permettre le perçage et le passage de moyens de fixation (non représentés) du panneau photovoltaïque 12. Chaque zone de perçage 28 peut comporter une empreinte ou une marque indiquant un emplacement de perçage, et/ou une zone pré-affaiblie mécaniquement pour favoriser le perçage par exemple.

La plaque de support 10 forme un bourrelet 30 qui présente une forme en U inversé, le bourrelet 30 comprenant une première portion longitudinale 32, une seconde portion longitudinale 34 et une portion supérieure 36 transversale intermédiaire. Le bourrelet 30 est disposé de façon à écarter l'eau de ruissellement transversalement sur les côtés.

De plus, le bourrelet 30 présente un fente 38 qui est formée dans la portion supérieure 36 du bourrelet 30, pour permettre le passage de câbles entre la plaque de support 10 et le panneau photovoltaïque 12.

De façon complémentaire, la plaque de support 10 délimite deux trous 40 pour le passage de câbles à travers la plaque de support 10.

Comme on peut le voir à la [Fig.1] , la plaque 10 comprend une pluralité de rails 42 de guidage saillant formant chicane, qui sont agencés en amont de la fente 38 suivant le sens d'écoulement de l'eau, et qui sont agencés globalement en V inversé pour dévier l'écoulement de l'eau vers les bords de la plaque de support 10.

Aussi, la plaque de support 10 comporte une bouche 44 tubulaire qui traverse la face avant 22 et qui est conçue pour être raccordée sur un dispositif d'extraction ou de ventilation (non représenté), comme un dispositif de ventilation double flux par exemple. La bouche 44 est adaptée pour permettre la récupération de l'air qui est chauffé par le panneau photovoltaïque 12 et qui est contenu entre le panneau photovoltaïque 12 et la face avant 22 de plaque de support 10.

Conformément à l'invention, la plaque de support 10 comporte un dispositif d'allongement 46 qui permet d'adapter les dimensions de la plaque de support 10 aux dimensions du panneau photovoltaïque 12 associé.

Selon un premier mode de réalisation de l'invention illustré aux figures 1 et 2, le dispositif d'allongement 46 comprend une première bande d'allongement 48a longitudinale et une deuxième bande d'allongement 48b longitudinale qui s'étendent chacune longitudinalement sur toute la longueur de la plaque de support 10.

Chaque bande d'allongement48a, 48b longitudinale est apte à être étendue ou rétractée pour permettre l'allongement ou le rétrécissement de la plaque de support 10 suivant une direction transversale, perpendiculaire aux bandes d'allongement 48a, 48b longitudinales.

La première bande d'allongement 48a est interposée entre le premier bord latéral 14 et la première portion longitudinale 32 du bourrelet 30.

Par symétrie axiale suivant un axe A médian de symétrie représenté à la [Fig.1], la deuxième bande d'allongement 48b est interposée entre le second bord latéral 16 et la seconde portion longitudinale 34 du bourrelet 30.

Chaque bande d'allongement48a, 48b longitudinale forme un accordéon globalement en forme de sinusoïde, qui comprend une pluralité de plis 50 longitudinaux, comme on peut le voir à la [Fig.2].

Aussi, chaque bande d'allongement 48a, 48b longitudinale est réalisée venue de matière avec la plaque de support 10, par exemple par moulage en matière plastique.

On notera que les bandes d'allongement 48a, 48b s'étendent vers l'avant de sorte que la face arrière 20 de la plaque de support 10 présente une forme globalement plane pour favoriser l'implantation de la plaque de support 10 sur une toiture.

De préférence, chaque bande d'allongement 48a, 48b longitudinale est déformable élastiquement, c'est à dire que chaque bande d'allongement 48a, 48b est apte à être allongée et rétrécie successivement sans subir de déformation plastique.

A titre non limitatif, le dispositif d'allongement 46 peut être constitué par tout autre type de dispositif que celui décrit précédemment, adapté pour permettre l'allongement et/ou le rétrécissement de la plaque de support 10, comme un dispositif (non représenté) comportant des rails de guidage sur lesquels sont montés coulissant transversalement le premier bord latéral 14 et le second bord latéral 16 par rapport à une portion centrale de la plaque de support 10.

De même, toujours à titre non limitatif, la plaque de support 10 peut être formée en deux portions indépendantes suivant l'axe A de symétrie, et le dispositif d'allongement 46 peut comporter une paire de rails transversaux sur lesquels les deux parties indépendantes de la plaque de support 10 sont montées coulissantes transversalement.

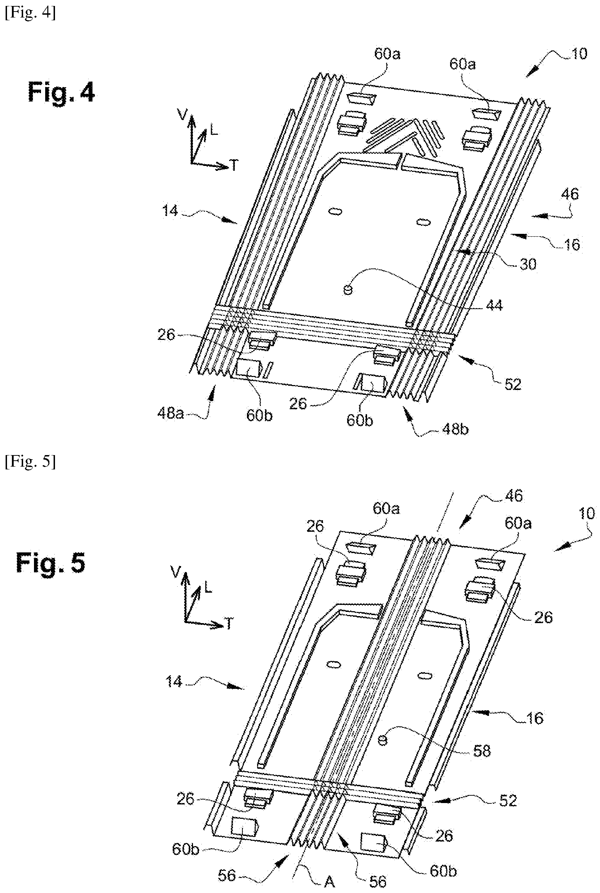

Selon un deuxième mode de réalisation de l'invention illustré à la [Fig.4], le dispositif d'allongement 46 comprend une troisième bande d'allongement 52 transversale qui s'étend transversalement sur toute la largeur de la plaque de support 10 et qui est apte à être étendue ou rétractée pour permettre l'allongement ou le rétrécissement de la plaque de support 10 suivant une direction longitudinale, perpendiculaire à la troisième bande d'allongement 52. On notera que la troisième bande d'allongement 52 s'ajoute à la première et à la deuxième bandes d'allongement 48a, 48b longitudinales.

La troisième bande d'allongement 52 transversale est interposée entre les deux plots de positionnement 26 inférieurs et une extrémité inférieure du bourrelet 30.

De plus, la troisième bande d'allongement 52 forme un accordéon en forme de sinusoïde, qui comprend une pluralité de plis 54 transversaux, comme on peut le voir à la [Fig.4].

Aussi, la troisième bande d'allongement 52 est réalisée venue de matière avec la plaque de support 10, par exemple par moulage en matière plastique.

De préférence, la troisième bande d'allongement 52 est déformable élastiquement, c'est à dire qu'elle est apte à être allongée et rétrécie successivement sans subir de déformation plastique.

Selon un troisième mode de réalisation de l'invention illustré à la [Fig.5], le dispositif d'allongement 46 comprend une unique première bande d'allongement 56 longitudinale qui est similaire à la première bande d'allongement 48a longitudinale décrite précédemment dans le premier mode de réalisation de l'invention.

A la différence du premier mode de réalisation de l'invention, la première bande d'allongement 56 longitudinale selon le troisième mode de réalisation est agencée au centre de la plaque de support 10, suivant l'axe A de symétrie, pour permettre l'allongement ou le rétrécissement de la plaque de support 10 suivant une direction transversale, de sorte que les plots de positionnement 26 sont écartés ou rapprochés transversalement pour s'adapter à l'empattement du panneau photovoltaïque associé.

De plus, toujours selon le troisième mode de réalisation de l'invention, on notera la présence de la troisième bande d'allongement 52 transversale décrite dans le deuxième mode de réalisation de l'invention.

Aussi, toujours selon le troisième mode de réalisation de l'invention, la plaque de support 10 comprend une bouche 58 décentrée qui est adaptée pour permettre la récupération de l'air.

Selon un autre aspect de l'invention, commun au deuxième et au troisième mode de réalisation de l'invention, la plaque de support 10 comporte deux butées supérieures 60a et deux butées inférieures 60b opposées qui sont agencées de façon à coopérer avec un bord supérieur et un bord inférieur (non représentés) respectivement du panneau photovoltaïque 12 monté sur la plaque de support 10, pour s'opposer au retrait longitudinale de la plaque de support 10, notamment en cas de rappel élastique engendré par la troisième bande d'allongement 52.

En effet, la troisième bande d'allongement 52 transversale peut induire un rappel élastique longitudinal des deux parties de la plaque de support 10 qui sont agencées de part et d'autre de la troisième bande d'allongement 52.

De même, selon un autre aspect de l'invention commun aux trois modes de réalisation, le premier bord latéral 14 et le second bord latéral 16 de la plaque de support 10 forment une première butée latérale et une seconde butée latérale respectivement qui sont agencées de façon à coopérer avec un premier bord latéral 62 et un second bord latéral 64 respectivement du panneau photovoltaïque 12 monté sur la plaque de support 10, pour s'opposer au retrait transversale de la plaque de support 10, comme on peut le voir à la [Fig.3].

Toutefois, en variante de réalisation de l'invention non représentée, le premier bord latéral 14 et le second bord latéral 16 de la plaque de support 10 peuvent affleurer les plots de positionnement 26, pour permettre au panneau photovoltaïque 12 agencé sur la plaque de support 10 de s'étendre transversalement au-delà du premier bord latéral 14 et du second bord latéral 16 de la plaque de support 10.

Cette caractéristique permet notamment d'agencer deux panneaux photovoltaïques 12 en position paysage, c'est à dire superposés selon une direction longitudinale, sur deux plaques de support 10 en position portrait, de sorte que les panneaux photovoltaïques 12 et les plaques de supports 10 associées sont croisés.

Cette caractéristique est rendue possible grâce au dispositif d'allongement de l'invention.

Selon un exemple de réalisation préféré, la plaque de support 10 est réalisée par injection en polypropylène.

A titre non limitatif, la plaque de support 10 selon l'invention peut également être réalisée par tout autre type de procédé de fabrication adapté, notamment par thermoformage.

La présente invention concerne également un ensemble 66 illustré à la [Fig.2], qui comprend une plaque de support 10 telle que décrite précédemment et un panneau photovoltaïque 12 monté sur la plaque de support 10. L'ensemble 66 ainsi formé peut être monté et préparé au sol avant d'être monté sur une toiture par exemple, le montage au sol ou en atelier de l'ensemble 66 étant plus aisé qu'un montage en hauteur sur une toiture d'un bâtiment.

La présente description de l'invention est donnée à titre d'exemple non limitatif.

On comprendra que l'invention vise aussi à s'appliquer à une plaque de support 10 qui comporte un dispositif d'allongement 46 comprenant une bande d'allongement qui s'étend longitudinalement sur toute la longueur de la plaque de support 10 et qui s'étend transversalement sur toute la largeur de la plaque de support 10, pour permettre à la plaque de support 10 de se déformer suivant au moins une direction transversale et/ou une direction longitudinale.

## Revendications

1. Plaque de support (10) adaptée pour la fixation et l'intégration d'un panneau photovoltaïque (12) sur une toiture d'un bâtiment, ladite plaque de support (10) étant délimitée transversalement par un premier bord latéral (14) et un second bord latéral (16) et longitudinalement par un premier bord supérieur (18) et un second bord inférieur (20), **caractérisée en ce que** la plaque de support (10) comporte un dispositif d'allongement (46) suivant au moins une direction transversale et/ou une direction longitudinale, pour adapter les dimensions de la plaque de support (10) aux dimensions du panneau photovoltaïque (12) associé.

2. Plaque de support (10) selon la revendication 1, **caractérisée en ce que** le dispositif d'allongement (46) comprend au moins une première bande d'allongement (48a) qui s'étend longitudinalement et qui est apte à être étendue ou rétractée pour permettre l'allongement ou le rétrécissement de la plaque de support (10) suivant une direction transversale perpendiculaire à ladite première bande d'allongement (48a).

3. Plaque de support (10) selon la revendication 2, **caractérisée en ce que** ladite première bande d'allongement (48a) forme un accordéon qui comprend au moins un plis (50) longitudinal.

4. Plaque de support (10) selon l'une quelconque des revendications 1 ou 2, **caractérisée en ce que** ladite première bande d'allongement (48a) est réalisée venue de matière avec la plaque de support (10).

5. Plaque de support (10) selon l'une quelconque des revendications précédentes, **caractérisée en ce que** le dispositif d'allongement (46) comprend au moins une deuxième bande d'allongement (48b) qui s'étend longitudinalement et qui est apte à être étendue ou rétractée pour permettre l'allongement ou le rétrécissement de la plaque de support (10) suivant une direction transversale à ladite deuxième bande d'allongement (48b).

6. Plaque de support (10) selon l'une quelconque des revendications précédentes, **caractérisée en ce que** le dispositif d'allongement (46) comprend au moins une troisième bande d'allongement (52) qui s'étend transversalement et qui est apte à être étendue ou rétractée pour permettre l'allongement ou le rétrécissement de la plaque de support (10) suivant une direction longitudinale perpendiculaire à ladite troisième bande d'allongement (52).

7. Plaque de support (10) selon l'une quelconque des revendications précédentes, **caractérisée en ce qu'**elle comporte au moins une butée supérieure (60a) et une butée inférieure (60b) opposées qui sont agencées de façon à coopérer avec un bord supérieur et un bord inférieur respectivement d'un panneau photovoltaïque (12) monté sur ladite plaque de support (10), pour s'opposer au retrait longitudinal de la plaque de support (10).

8. Plaque de support (10) selon l'une quelconque des revendications précédentes, **caractérisée en ce qu'**elle comporte au moins une première butée latérale (14) et une seconde butée latérale (16) opposées qui sont agencées de façon à coopérer avec un premier bord latéral (62) et un second bord latéral -64) respectivement d'un panneau photovoltaïque (12) monté sur ladite plaque de support (10), pour s'opposer au retrait transversal de la plaque de support (10).

9. Plaque de support (10) selon l'une quelconque des revendications précédentes, **caractérisée en ce qu'**elle comporte une bouche (44) qui est adaptée pour permettre la récupération de l'air interposé entre un panneau photovoltaïque (12) et la plaque de support (10).

10. Ensemble (66) qui comprend une plaque de support (10) selon l'une quelconque des revendications 1 à 9, et un panneau photovoltaïque (12) monté sur ladite plaque de support (10).

## Patentansprüche

1. Trägerplatte (10), die zur Befestigung und Integration eines Photovoltaikpaneels (12) auf einem Dach eines Gebäudes angepasst ist, wobei die Trägerplatte (10) quer durch einen ersten seitlichen Rand (14) und einen zweiten seitlichen Rand (16), und längs durch einen ersten oberen Rand (18) und einen zweiten unteren Rand (20) begrenzt ist, **dadurch gekennzeichnet, dass** die Trägerplatte (10) eine Verlängerungsvorrichtung (46), entlang mindestens einer Querrichtung und/oder einer Längsrichtung beinhaltet, um die Abmessungen der Trägerplatte (10) den Abmessungen des zugehörigen Photovoltaikpaneels (12) anzupassen.

2. Trägerplatte (10) nach Anspruch 1, **dadurch gekennzeichnet, dass** die Verlängerungsvorrichtung (46) mindestens einen ersten Verlängerungsstreifen (48a) umfasst, der sich längs erstreckt und der imstande ist, erweitert oder eingezogen zu werden, um die Verlängerung oder die Verkürzung der Trägerplatte (10) entlang einer Querrichtung senkrecht zum ersten Verlängerungsstreifen (48a) zu ermöglichen.

3. Trägerplatte (10) nach Anspruch 2, **dadurch gekennzeichnet, dass** der Verlängerungsstreifen (48a) ein Akkordeon bildet, das mindestens eine Längsfalte (50) umfasst.

4. Trägerplatte (10) nach einem der Ansprüche 1 oder 2, **dadurch gekennzeichnet, dass** der erste Verlängerungsstreifen (48a) aus einem Stück mit der Trägerplatte (10) ausgeführt ist.

5. Trägerplatte (10) nach einem der vorstehenden Ansprüche, **dadurch gekennzeichnet, dass** die Verlängerungsvorrichtung (46) mindestens einen zweiten Verlängerungsstreifen (48b) umfasst, der sich längs erstreckt, und der imstande ist, erweitert oder eingezogen zu werden, um die Verlängerung oder die Verkürzung der Trägerplatte (10) entlang einer Richtung quer zum zweiten Verlängerungsstreifen (48b) zu ermöglichen.

6. Trägerplatte (10) nach einem der vorstehenden Ansprüche, **dadurch gekennzeichnet, dass** die Verlängerungsvorrichtung (46) mindestens einen dritten Verlängerungsstreifen (52) umfasst, der sich quer erstreckt, und der imstande ist, erweitert oder eingezogen zu werden, um die Verlängerung oder die Verkürzung der Trägerplatte (10) entlang einer Längsrichtung senkrecht zum dritten Verlängerungsstreifen (52) zu ermöglichen.

7. Trägerplatte (10) nach einem der vorstehenden Ansprüche, **dadurch gekennzeichnet, dass** sie mindestens einen oberen Anschlag (60a) und einen gegenüberliegenden unteren Anschlag (60b) beinhaltet, die angeordnet sind, um jeweils mit einem oberen Rand und einem unteren Rand eines Photovoltaikpaneels (12) zusammenzuwirken, das auf der Trägerplatte (10) montiert ist, um dem Ausbau in Längsrichtung von der Trägerplatte (10) entgegenzuwirken.

8. Trägerplatte (10) nach einem der vorstehenden Ansprüche, **dadurch gekennzeichnet, dass** sie mindestens einen ersten seitlichen Anschlag (14) und einen gegenüberliegenden zweiten seitlichen Anschlag (16) beinhaltet, die angeordnet sind, um jeweils mit einem ersten seitlichen Rand (62) und einem zweiten seitlichen Rand (64) eines Photovoltaikpaneels (12) zusammenzuwirken, das auf der Trägerplatte (10) montiert ist, um dem Ausbau in Querrichtung von der Trägerplatte (10) entgegenzuwirken.

9. Trägerplatte (10) nach einem der vorstehenden Ansprüche, **dadurch gekennzeichnet, dass** sie eine Mündung (44) beinhaltet, die angepasst ist, um die Rückgewinnung von zwischen einem Photovoltaikpaneel (12) und der Trägerplatte (10) befindlicher Luft zu ermöglichen.

10. Baugruppe (66), die eine Trägerplatte (10) nach einem der Ansprüche 1 bis 9 und ein Photovoltaikpaneel (12) umfasst, das auf der Trägerplatte (10) montiert ist.

## Claims

1. A support plate (10) adapted for fastening and integrating a photovoltaic panel (12) on a roof of a building, said support plate (10) being delimited transversely by a first lateral edge (14) and a second lateral edge (16) and longitudinally by a first upper edge (18) and a second lower edge (20), **characterised in that** the support plate (10) includes a device (46) for elongation according to at least one transverse direction and/or one longitudinal direction, to adapt the dimensions of the support plate (10) to the dimensions of the associated photovoltaic panel (12).

2. The support plate (10) according to claim 1, **characterised in that** the elongation device (46) comprises at least one first elongation strip (48a) which extends longitudinally, and which is able to be extended or retracted to enable elongation or shortening of the support plate (10) according to a transverse direction perpendicular to said first elongation strip (48a).

3. The support plate (10) according to claim 2, **characterised in that** said first elongation strip (48a) forms an accordion which comprises at least one longitudinal fold (50).

4. The support plate (10) according to any one of claim 1 or 2, **characterised in that** said first elongation strip (48a) is made in one-piece with the support plate (10).

5. The support plate (10) according to any one of the preceding claims, **characterised in that** the elongation device (46) comprises at least one second elongation strip (48b) which extends longitudinally, and which is able to be extended or retracted to enable elongation or shortening of the support plate (10) according to a direction transverse to said second elongation strip (48b).

6. The support plate (10) according to any one of the preceding claims, **characterised in that** the elongation device (46) comprises at least one third elongation strip (52) which extends transversally, and which is able to be extended or retracted to enable elongation or shortening of the support plate (10) according to a longitudinal direction perpendicular to said third elongation strip (52) .

7. The support plate (10) according to any one of the preceding claims, **characterised in that** it includes at least one upper stop (60a) and one lower stop (60b) opposite one another, which are arranged so as to cooperate with an upper edge and a lower edge respectively of a photovoltaic panel (12) mounted on said support plate (10), to oppose longitudinal removal of the support plate (10).

8. The support plate (10) according to any one of the preceding claims, **characterised in that** it includes at least one first lateral stop (14) and one second lateral stop (16) opposite one another, which are arranged so as to cooperate with a first lateral edge (62) and a second lateral edge (64) respectively of a photovoltaic panel (12) mounted on said support plate (10), to oppose transversal removal of the support plate (10).

9. The support plate (10) according to any one of the preceding claims, **characterised in that** it includes an intake (44) which is adapted to enable recovery of air interposed between a photovoltaic panel (12) and the support plate (10).

10. An assembly (66) which comprises a support plate (10) according to any one of claims 1 to 9, and a photovoltaic panel (12) mounted on said support plate (10).
